(19) Europäisches Patentamt / European Patent Office / Office européen des brevets

(11) **EP 2 702 799 B1**

(12) **EUROPEAN PATENT SPECIFICATION**

(45) Date of publication and mention
of the grant of the patent:
**25.02.2015 Bulletin 2015/09**

(51) Int Cl.:
***H04W 28/08*** (2009.01)

(21) Application number: **11721258.9**

(22) Date of filing: **28.04.2011**

(86) International application number:
**PCT/EP2011/056792**

(87) International publication number:
**WO 2012/146295 (01.11.2012 Gazette 2012/44)**

(54) **METHOD AND APPARATUS FOR MODE-SWITCHING AT A BASE STATION**

VERFAHREN UND VORRICHTUNG FÜR BETRIEBSMODUSWECHSEL BEI EINER BASISSTATION

PROCÉDÉ ET APPAREIL POUR LA COMMUTATION DE MODES SUR UNE STATION DE BASE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.03.2014 Bulletin 2014/10**

(73) Proprietor: **Fujitsu Limited
Kawasaki-shi, Kanagawa 211-8588 (JP)**

(72) Inventors:
• **LI, Zhaojun
Guildford
Surrey GU3 2DJ (GB)**
• **BUCKNELL, Paul
Brighton
Sussex BN2 1SP (GB)**
• **MOULSLEY, Timothy
Hayes
Middlesex UB4 8FE (GB)**
• **KAWASAKI, Yoshihiro
Kanagawa 211-8588 (JP)**

(74) Representative: **Hutchison, James et al
Haseltine Lake LLP
300 High Holborn
London, Greater London WC1V 7JH (GB)**

(56) References cited:
**WO-A1-2010/093298**

• **3GPP: "3rd Generation Partnership Project;
Technical Specification Group Radio Access
Networks; Evolved Universal Terrestrial Radio
Access (E-UTRA); Potential solutions for energy
saving for E-UTRAN (Release 10)", 3GPP DRAFT;
TR 36927 V1.1.1, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG3, no. Taipei,
Taiwan; 20110221, 6 March 2011 (2011-03-06),
XP050497946, [retrieved on 2011-03-06] cited in
the application**
• **ERICSSON: "Considerations on energy saving
solutions in heterogeneous networks", 3GPP
DRAFT; R3-092478, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, no. Miyazaki; 20091012, 12
October 2009 (2009-10-12), XP050391986,
[retrieved on 2009-10-03]**

## Description

This invention is in the field of wireless communications networks, and in particular relates to an energy saving scheme in a base station of a mobile communication system, a coverage base station operating in the same system, and a method and computer program for a base station. Embodiments of the present invention are suitable for use as or in booster base stations whose cells provide additional capacity to a coverage cell at times of high traffic, and are switched to an energy-saving or dormant mode at times of low traffic.

Particularly, but not exclusively, the present invention relates to a wireless communication method compliant with the LTE (Long Term Evolution) and LTE-Advanced radio technology groups of standards as, for example, described in the 36-series (in particular, specification documents 36.xxx such as 3GPP TS 36.423 V10.0.0 and documents related thereto) and releases 9, 10 and subsequent of the 3GPP specification series.

The Evolved UTRAN is an evolution of the 3G UMTS radio-access network UTRAN towards a high-data-rate, low-latency and packet-optimized radio-access network in the LTE and LTE-Advanced technology. The E-UTRAN architecture is described, for example, in 3GPP TR 36.401, in particular section 6.

As in current UMTS systems, the basic architecture of LTE (and, consequently, of LTE-Advanced) consists of a radio access network (the E-UTRAN) connecting users (or, more precisely, user equipments (UEs)) to access nodes (E-UTRAN Nodes B, eNBs) acting as base stations, these access nodes in turn being linked to a core network (the Evolved Packet Core, EPC). The eNBs provide E-UTRA (Evolved Universal Terrestrial Radio Access) user plane and control plane protocol terminations towards the UEs. The eNBs (the term "eNB" is interchangeably used with the term "access node" in the present application) are interconnected with each other by means of a X2 interface. The eNBs are also connected by means of a S1 interface (S1 is the interface between an eNodeB and the Core Network) to the EPC, more specifically to the Mobile

Management Entity (MME) by means of a S1-MME and to the Serving GateWay (S-GW) by means of an S1-user plane (S1-U). The S1 interface supports a many-to-many relation between MMEs / Serving Gateways and eNBs.

Further details of the E-UTRAN radio interface protocol architecture are described, for example, in 3GPP TR 36.300.

An eNB may support Frequency Division Duplex (FDD mode), Time Division Duplex (TDD) mode or dual mode operation. eNBs may be interconnected for signalling through the X2. The X2 may be a logical interface between two eNBs. Whilst logically representing a point to point link between eNBs, the physical realization needs not be a point to point link. The X2 interface is described in more detail, for example, in specification series 3GPP TS 36.42x.

Base stations (which may be eNBs designated as 'booster base stations' by their mode of operation and/or the network arrangement) consume energy when they are operational. Therefore, at times when a coverage base station has enough capacity to deal with the traffic load in its own coverage cell, the booster base station can operate its cell(s) in a dormant mode in which it consumes little or no energy.

The energy saving functionality of base stations, for example that introduced in 3GPP Release-9, enables the cell of a booster base station to provide additional capacity in a network when needed, and for the booster base station to change to operating the cell in a low-energy mode otherwise (or switch the cell off). A base station, for example an enhanced node base station (eNB), may autonomously decide to switch off its cell(s), and a cell may be re-activated by a request from a peer base station, which could also be an eNB.

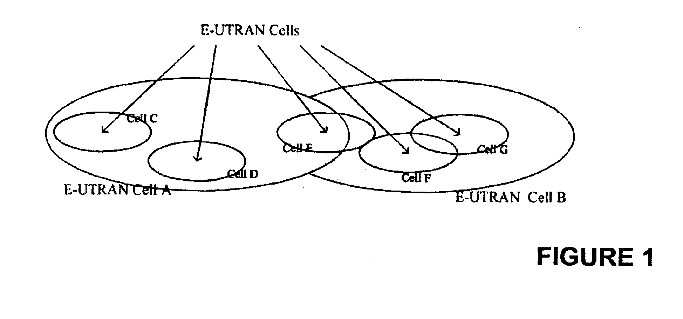

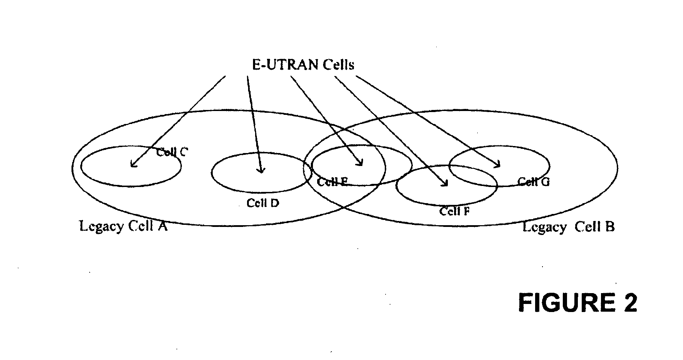

The following examples relating to Figures 1 and 2, and the Figures themselves, are based on technical report TR36.927 "Potential Energy Saving Solutions for E-UTRAN", which summarises the energy saving solutions for inter-eNB and inter-RAT scenarios. Further details can be found in TR36.927. Of course, while the discussion therein relates specifically to the E-UTRAN interface, embodiments of the present invention are not limited to E-UTRAN technology.

Figure 1 shows an inter-eNB energy saving scenario in which E-UTRAN Cells C, D, E, F and G are covered by the E-UTRAN Cells A and B. Here, Cell A and B have been deployed to provide basic coverage, while the other E-UTRAN cells boost the capacity when required. When some cells providing additional capacity are no longer needed, they may be switched off for energy optimization. In this case, both the continuity of LTE coverage and service QoS is guaranteed.

Figure 2 shows an inter-RAT (Radio Access Technology) energy saving scenario in which E-UTRAN Cells C, D, E, F and G are totally covered by the same legacy RAT Cell A and B (e.g. UMTS or GSM). Cell A/B has been deployed to provide basic coverage of the services in the area, while other E-UTRAN cells boost the capacity.

To achieve energy savings in these two energy savings scenarios, two fundamental approaches, which differ in how capacity-booster E-UTRAN cells enter or wake up from dormant mode, can be used. These approaches are:

1. Operation and Maintenance (OAM)-based approach: E-UTRAN cells enter or leave dormant mode based on centralized OAM decisions, which are made based on statistical information obtained from coverage and/or GERAN (GSM/EDGE Radio Access Network)/UTRAN/E-UTRAN cells, e.g. load information, traffic QoS Class Indicator (QCI), etc The OAM decisions can be pre-configured or directly signalled to the EUTRAN cells.

2. Signalling-based approach: E-UTRAN cells may decide to enter dormant mode autonomously or based on information exchanged with the UTRAN/GERAN coverage cell. Switch off decisions/requests will be based on information locally available in the EUTRAN node, including load information of both the coverage and E-UTRAN cells. Switch-on may be performed based upon requests from one or more neighbour inter-RAT nodes, or based on internal EUTRAN node policies (periodic switch on, max switch off time, etc).

OAM in this context refers to a logical entity responsible for some settings of particular parameters of a base station, and modes (for example transmission modes) can be one of these settings. In particular the default settings for the base stations are typically set by the OAM logical entity and signalled to the base stations. OAM could determine the available transmission modes at a given base station as a subset of those supported, and the base station could make a local decision on a particular mode to use for a given terminal, e.g. depending on current conditions. Furthermore, traffic load in real networks often distributes unevenly in a spatial sense, which may result in some cells frequently being switched between modes unnecessarily and therefore compromising the energy savings achieved. Thus it is desirable to switch only the appropriate dormant cells to a higher capacity mode when meeting the capacity requirements imposed by increased traffic load in the vicinity.

Although these basic approaches can achieve a certain level of energy savings, some issues exist that require further improvement. When some capacity booster cells are in dormant mode and the load increases on the coverage cells, the coverage cells may not know the most appropriate booster cells to wake-up. The overloaded coverage cells may request wake-up all the hotspots (cells of booster stations) that are within the range of the umbrella cell (coverage cell), which is the least optimal way and may totally disable any energy savings, particularly if the load situation is dynamic.

3GPP: "3rd Generation Partnership Project; Technical Specification Group Radio Access networks; Evolved Universal Terrestrial Radio Access (E-UTRA); Potential solutions for energy saving for E-UTRAN (Release 10)", 3GPP DRAFT; TR 36927 V1.1.1; 6 March 2011 (2011-03-06), discloses a system for switching E-UTRAN cells in and out of dormant mode in scenarios in which the E-UTRAN cells are deployed for capacity enhancement with legacy network (UMTS or GSM) providing basic coverage. In one disclosed technique, when the coverage UTRAN/GERAN cell detects high load, it can request some dormant E-UTRAN cells to switch on their listening capability to perform and report Interference over Thermal (IoT) measurements. In certain scenarios, the overloaded coverage cells may request wake-up of one or more neighbouring dormant E-UTRAN cells. Switch off decisions/requests may be made by the E-UTRAN cell, and based on information locally available in the EUTRAN node, including load information of both the coverage and E-UTRAN cells.

ERICSSON: "Considerations on energy saving solutions in heterogeneous networks", 3GPP DRAFT; R3-092478, 12 October 2009 (2009-10-12), discloses a heterogeneous deployment scenario in which a cell adopted as a capacity booster monitors traffic load and is able to switch off when traffic drops below a certain threshold and stays below the threshold for certain time. During operation, the traffic load statistics is collected in cells providing basic coverage, for example: the load in the cell providing basic coverage; and load balancing action cell providing basic coverage triggers towards the capacity booster (like handover requests and/or rejections).

International patent publication WO2010/093298A1 discloses, in a radio communication network having one or more active cells, a procedure to request signal strength measurements in an area of at least one passive other cell of a radio base station currently not transmitting any cell-defining information for the passive cell. Based on received information representative of the requested signal strength measurements, at least one passive cell is selected for activation, and the selected cell is then requested to be activated by causing the corresponding radio base station managing the selected cell to start transmission of cell-defining information to assist user equipment in finding the cell.

According to an embodiment of the present invention, there is provided a base station arranged to operate in a wireless communications system as a booster base station providing a cell which is operable as a booster cell providing additional capacity to a coverage cell which it at least partially overlaps, the booster cell being operable to function in a first mode and a second mode, wherein the booster cell provides more additional capacity to the coverage cell when functioning in the first mode than it does when functioning in the second mode, the booster base station comprising a listening module configured to perform a survey of the uplink interference received at the booster base station, a storage module configured to store uplink scheduling information including information indicating uplink transmission resources granted to user equipments served by the coverage cell, a calculation module configured to calculate an adjusted uplink interference by subtracting from the survey of uplink interference a contribution made to the survey of uplink interference by user equipments which, based on the uplink scheduling information, are not served by the coverage cell, and a switching module configured to switch the booster cell from functioning in the second mode to functioning in the first mode in dependence upon whether the adjusted uplink interference meets a switching criterion.

Advantageously, such embodiments allow the selective activation of the booster cells to meet the additional capacity requirements by enabling the booster cells operating in the lower capacity or dormant mode to differentiate between the uplink interference caused by the active UEs being served by the coverage cell requesting additional capacity and interference from the UEs served by other neighbouring cells. This means that the most appropriate booster cells can exit the lower capacity or dormant mode to efficiently provide additional capacity for the increased traffic in the requesting coverage cell. The booster cell provides additional capacity via a handover of one or more UEs from the coverage cell to the booster cell.

A booster base station is an access node having a cell which at least partially overlaps a coverage cell of the coverage base station so that its cell may serve user equipments which are otherwise served by the coverage cell. A booster base station may be an eNB, and its cell(s) may be E-UTRAN cells. In a network architecture in which there are femto base stations, a femto base station could serve as a booster base station. A booster base station is also configured to have user equipments offloaded or handed over to it from the coverage base station.

A base station operating as a coverage base station is an access node having a cell being operated as a coverage cell which is at least partially overlapped by a cell (booster cell) of another base station (booster base station) configured to provide additional capacity to the coverage cell. The coverage base station may be an eNB and its cell(s) be E-UTRAN cell(s). Alternatively, the coverage base station may be a UMTS, GSM, or GERAN base station providing basic coverage of services in the area its cell covers, with nearby eNBs functioning as booster base stations with booster cells to ease the load on the coverage cell when traffic load is high.

The booster base station can operate its booster cell or booster cells in at least two modes. It may be that the second mode is simply being switched off (but still able to receive signals from the coverage base station) so that the booster cell does not serve any UEs, and that the first mode is being switched on, so that the booster cell does serve UEs. The second mode may be described as a dormant mode, and switching to the first mode may therefore be termed 'waking up'. The principal distinction between the two modes is that the amount of traffic the booster cell can handle from user equipments which are being, or would otherwise have been, served by the coverage cell is higher in the first mode than in the second. As an additional distinction, the second mode may consume less power than the first mode, so that energy savings are made by operating booster cells in the second mode. The modes may be considered to be 'operating modes' of the booster cell, or may be considered to be 'transmission modes', as long as at least the principal distinction (and possible also the additional distinction) above applies between the two modes. It may be that the first and second modes are any two of more than two modes in which the booster base station is configured to operate the booster cell.

The listening module is configured to perform a survey of the uplink interference received at the booster base station. Performing a survey may simply be measuring the level of the total uplink interference power. Performing a survey may include recording the power received on a particular transmission resource for a range of transmission resources. Thus, in the survey of uplink interference gathered by the listening module and passed to the calculation module, the total power received is split into components for particular transmission resources. The uplink interference surveyed by the listening module may be spread across a range of transmission resources, and the survey is thus a record of the uplink transmission power received on a per-transmission resource basis. The range of transmission resources surveyed, and the divisions of the range of transmission resources in the survey is implementation specific. For example, the range and divisions may be predefined based on the frame and subframe structure of the communications network, and on the frequency allocation in the communications network. The transmission resources may be divided according to one or more of timing (subframe), frequency, or spatial (directional) resources. Similarly, the uplink scheduling information may include information indicating which time, frequency or spatial transmission resources have been granted to UEs served by the coverage cell, and may also include time synchronisation information.

Uplink interference is considered from the point of view of the booster base station, so that in dormant mode (switched off), all uplink signals contribute to the uplink interference because none are intended for the listening booster base station and consequently uplink interference is all uplink transmissions. In some embodiments, of particular interest is the rise in overall interference caused by uplink transmissions from UEs served by the coverage cell. In an embodiment in which the booster base station provides some capacity in the lesser mode, uplink transmission power components included in the 'survey of uplink interference' (i.e. uplink interference pre-adjustment) would only be from transmissions not intended for the booster base station. The calculation module may also be configured to calculate the total uplink interference level from the survey of uplink interference. The total uplink interference level may be used in calculations of adjusted uplink interference, or in thermal noise calculations. The adjusted uplink interference may be a set of components of uplink interference power received over particular transmission resources, or may be an adjusted uplink interference level, representing a sum of components of transmission resources not excluded (from being from UEs served by the coverage cell) by the uplink scheduling information.

Embodiments of the present invention may further comprise a request receiving module configured to receive a request for additional capacity from the coverage base station. In such embodiments, the listening module is configured to perform a survey of uplink interference received at the booster base station in response to the request. Advantageously, in embodiments having the request receiving module, the listening module may be configured to only perform a survey when the booster cell may be required to provide additional capacity, therefore the booster base station does not consume energy unnecessarily by performing surveys when no additional capacity is required.

Optionally, embodiments of the present invention may further comprise a scheduling information receiving module configured to receive the uplink scheduling information from the coverage base station for storage in the storage module. Such embodiments enable the information exchange between the coverage cell of the coverage base station requesting cell activation and the booster base station having the dormant booster cell regarding, e.g. uplink scheduling information and/or information for time synchronisation. This information can be used by the booster base station to differentiate the interference caused by the active UEs served by the coverage cell of the coverage base station requesting additional capacity from by the ones served by other neighbouring cells. This is achieved by improving the effectiveness of measurements used to identify uplink transmissions from UEs which could potentially be served by the dormant cell. Therefore, when required, the most appropriate booster cells can exit their lower capacity or dormant mode to efficiently provide additional capacity for the increased traffic in the requesting coverage cell.

As an additional optional function, the scheduling information receiving module may also be configured to receive uplink scheduling information from base stations serving neighbouring cells for storage in the storage module as part of the scheduling information, the scheduling information from the neighbouring base stations indicating uplink transmission resources granted to user equipments served by those neighbouring base stations respectively. If the calculation module has information regarding transmission resources granted to UEs served by cells other than the coverage cells, then the accuracy of the adjusted uplink interference in terms of providing a true representation of the amount of traffic being handled by the coverage cell that could be handled by the booster cell is improved. Furthermore, the booster base station can assess whether it could usefully provide capacity to the neighbouring base station.

Scheduling information received from the coverage base station and possibly other neighbouring access nodes may include information indicating uplink transmission resources granted to user equipments for past subframes. Advantageously, this enables the calculation module to use survey data gathered by the listening module in the past to obtain adjusted uplink interference. Therefore, the listening module need not wait for uplink scheduling information to be available to the calculation module to begin performing the survey, and the overall time for the procedure is reduced.

As a further option, the scheduling information may alternatively or additionally include information indicating uplink transmission resources granted to user equipments for future subframes. It may be that the scheduling information is exchanged between access nodes regardless of whether a coverage base station has requested additional capacity. The scheduling information could be signalled between base stations on a periodical basis, either piggy backed to other signals or as a dedicated separate signal. Advantageously, by including uplink scheduling information for future subframes the calculation module does not need to wait for scheduling information to begin calculating adjusted uplink interference from the survey of uplink interference, but already has the information for the relevant period of time available.

The precise nature of the uplink scheduling information will depend on the implementation and how resources are allocated in the network or system in question. For example, allocation of uplink resources to UEs served by different cells may be static, dynamic, or a mixture of the two. Optionally, the uplink transmission resources indicated by the scheduling information include subframes which can always be assumed to be granted to user equipments served by the coverage cell. Alternatively or additionally, the uplink transmission resources indicated by the scheduling information include subframes which can always be assumed to be granted to user equipments not served by the coverage cell. Along with, or instead of, the subframe uplink transmission resources, the uplink transmission resources indicated by the scheduling information include frequency domain resources which can always be assumed to be granted to user equipments served by the coverage cell. Again, along with or instead of any combination of the uplink transmission resources recited above, the uplink transmission resources indicated by the scheduling information include frequency domain resources which can always be assumed to be granted to user equipments not served by the coverage cell. It may be, even in a system in which the allocation of uplink transmission resources is at least partially dynamic, that there are particular transmission resources that can always be assumed to be granted to UEs served by the coverage cell, or that will never be granted to UEs served by the coverage cell. Advantageously, in either case the uplink scheduling information will improve the ability of the booster base station to assess when it is required to ease the load of the coverage cell, by allowing some distinction to be made at the calculation module between uplink interference that may be due to UEs served by the coverage cell, and UEs served by other cells.

In some communication systems, spatial transmission resources may be granted to UEs served by particular cells. In such systems, the uplink transmission resources indicated by the scheduling information include transmission resources defined in the spatial domain.

Optionally, the frequency domain resources are specified per sub-carrier. In OFDM-based protocols such as LTE, each OFDM sub-carrier could be considered as a separate resource. Alternatively one or more groups of sub-carriers can be considered (i.e. a resource block (RB)). In the uplink, each transmission can occupy a bandwidth of one or more RBs. Allocations of RBs are not necessarily contiguous, and may be represented in the uplink scheduling information as a bitmap.

The adjusted uplink interference obtained using the uplink scheduling information provides a representation of the amount of uplink data traffic currently being handled by the coverage cell that the booster cell could handle in order to provide additional capacity and hence ease the load on the coverage cell. The adjusted uplink interference therefore represents an improved measure for deciding whether or not to switch the mode of the booster cell. Precisely how the adjusted uplink interference is used in deciding whether to switch modes will vary between implementations, and could be based on a simple comparison with a threshold value. The decision is based on a 'switching criterion'. Optionally, the switching criterion is based on a ratio of the adjusted uplink interference to thermal noise, and may be based on the increase (rise) in the uplink interference over thermal noise (a specific measure of the ratio of adjusted uplink interference to thermal noise) caused by UEs served by the coverage cell. Advantageously, the rise in interference over thermal noise reflects the signal to interference plus noise ratio, and therefore can be used to determine the traffic load that the booster cell could take over from the coverage cell in order to boost capacity and ease the load on the coverage cell. For example, if there is a large amount of thermal noise in comparison to the adjusted uplink interference, the ability of the booster cell to handle traffic on behalf of the coverage cell will be impeded. In such a case, the benefit to be derived from switching the booster cell to the first mode may not justify the increase in power consumption. On the other hand, if there is little thermal noise in comparison to the adjusted uplink interference, then the booster cell would be able to take over enough traffic on behalf of the coverage cell to justify the additional power consumption associated with the switch from the second mode to the first mode.

Regardless of whether or not the switching criterion is based on the adjusted uplink interference to thermal noise ratio, the switching criterion may be a simple threshold value. Such an embodiment is simple to implement and consistent. However, other techniques such as a rolling average of a value of adjusted uplink interference to thermal noise ratio over time may be used and compared to a threshold. Alternatively, the threshold may not be a simple value, but a proportion of sample measurements of adjusted uplink interference level or adjusted uplink interference to thermal noise ratio that have to exceed a threshold.

The present invention may also be embodied as a method for deciding whether to switch a cell of a base station from functioning in a first mode to functioning in a second mode, the method for use in a base station arranged to operate in a wireless communications system as a booster base station providing a cell which is operable as a booster cell providing additional capacity to a coverage cell which it at least partially overlaps, the booster cell being operable to function in a first mode and a second mode, wherein the booster cell provides more additional capacity to the coverage cell when functioning in the first mode than it does when functioning in the second mode, the method comprising performing a survey of uplink interference received at the booster base station, calculating an adjusted uplink interference by subtracting from the survey of uplink interference a contribution made to the survey of uplink interference by user equipments which are not served by the coverage cell, based on uplink scheduling information including information indicating uplink transmission resources granted to user equipments served by the coverage cell, and switching the booster cell from functioning in the second mode to functioning in the first mode in dependence upon whether or not the adjusted uplink interference meets a switching criterion.

Embodiments of the present invention also include a base station arranged to operate in a wireless communications network as a coverage base station providing a cell which is operable as a coverage cell, the coverage cell at least partially overlapping a cell which is operable as a booster cell by a booster base station, providing additional capacity to the coverage cell, the booster cell being operable to function in a first mode and a second mode, wherein the booster cell provides more additional capacity to the coverage cell when functioning in the first mode than it does when functioning in the second mode, the coverage base station comprising: an additional capacity requesting module configured to transmit a request for additional capacity to the booster base station when traffic load at the coverage base station exceeds a threshold value; a scheduling information transmitting module configured to transmit to the booster base station uplink scheduling information including information identifying uplink transmission resources granted to user equipments served by the coverage cell.

In another aspect, the present invention may be embodied in a wireless communications system comprising a base station operating as a booster base station according to any of the booster base station embodiments described herein, and a base station operating as a coverage base station according to any of the coverage base station embodiments described herein.

In another aspect, the present invention may be embodied in a computer program which, when executed by a processor at an access node, causes the access node to function as a base station according to any of the base station embodiments described herein, or to perform the method detailed in any of the embodiments herein.

Detailed description of embodiments of the present invention will now be given, purely by way of example, with reference to the accompanying drawings in which:

Figure 1 shows an inter-eNB energy saving scenario in which E-UTRAN booster cells are covered by the E-UTRAN coverage cells A and B;
Figure 2 shows an inter-RAT energy saving scenario in which E-UTRAN booster cells are totally covered by the same legacy RAT Cell A and B (e.g. UMTS or GSM);
Figure 3 is an illustration of a network environment in which embodiments of the present invention are implemented;
Figure 4 is an illustration of a booster base station 10 embodying the present invention;
Figure 5 is a flowchart including the signalling used in a communication system embodying the present invention.

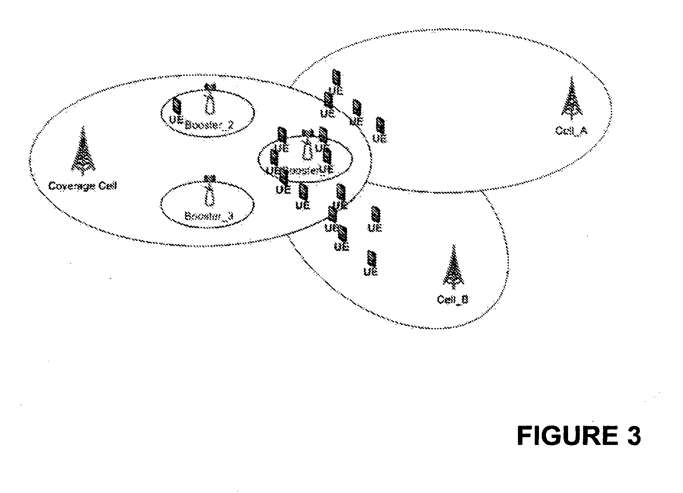

Figure 3 is an illustration of a network environment in which embodiments of the present invention are implemented. The coverage base station has a coverage cell, within which three booster base stations (booster_1, booster_2. booster_3) have booster cells. It can be seen that cells A and B overlap the cell served by booster_1, one another, and the coverage cell. There are a number of UEs illustrated, some of which are in an area covered by more than one of the coverage cell, cell A and cell B. The coverage base station is operable to send a request for additional capacity to booster base stations (booster_1, booster_2, booster_3) having cells overlapping with the coverage cell in response to an increase in traffic load in the coverage cell. The booster base stations having a listening module are then operable to survey the uplink interference at that particular booster base station. The base station booster has a cell which overlaps with the coverage cell but also with cell A and cell B. Therefore, uplink interference power received at booster_1 could be from UEs served by cell A, cell B, or the coverage cell.

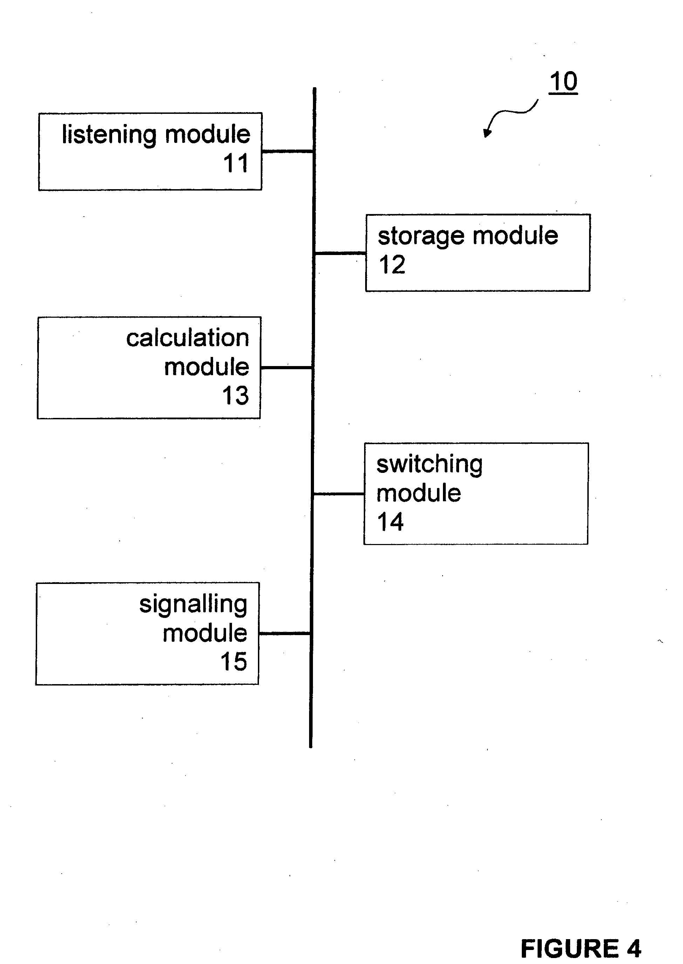

Figure 4 is an illustration of a base station operable as a booster base station 10 (also referred to in this document simply as a 'booster base station') embodying the present invention. Embodiments are not limited by the particular hardware configuration of the booster base station, as long as it provides the functionality required for each of the modules to perform their function. Whilst the modules are illustrated as separate entities, it may be that they share common hardware, for example, both the signalling module 15 and the listening module 11 may function using the same receiver. The booster base station 10 includes a listening module 11, a storage module 12, a calculation module 13, and a switching module 14. As an optional additional module, the booster base station 10 also includes a signalling module 15 which is operable to function as the request receiving module and/or the scheduling information receiving module. The modules are operable to transfer data to one another.

The listening module 11 either includes or has access to a wireless receiver. The listening module 11 also includes or has access to a processor. The listening module is operable to perform a survey of the uplink interference received at the booster base station. The survey may include not only recording the level of uplink interference power received across a range of uplink transmission resources, but also recording what components of that power were received on particular transmission resources. The precise subdivisions of transmission resources used to split the uplink interference power into components will depend on the implementation and in particular may reflect the division of uplink transmission resources granted to UEs for uplink transmissions in the communications protocol of the coverage cell or booster cell. The listening module 11 is operable to transfer data representing the survey results to the storage module 12 for storage and/or to the calculation module 13 for further processing.

The survey of uplink interference may be summed over its components, either at the listening module 11 or at the calculation module 13, to give a value representing the thermal noise level. In certain implementations, the thermal noise level is used by the switching module to obtain a measure of the rise in interference over thermal noise level caused by UEs served by the coverage cell for use as a criterion to assess whether or not to switch modes at the booster base station. The thermal noise level $N_0$ could simply be given by (equation 1):

$$N_0 \approx \sum_i E(f_i, t_i)$$

Where $E(f_i, t_i)$ is the received uplink power in transmission resources $f_i$ (frequency) and $t_i$ (time). Equation 1 is a simple method to estimate a measure of the background noise level, which it is assumed is due to thermal noise. Equation 1 estimates the thermal noise level by summing over all the resources. This would be appropriate if the system is lightly loaded, i.e. most of the resources do not contain data transmissions, or that they are of sufficiently low power to ignore (e.g. from distant UEs).

Depending on the implementation, the storage module 12 may be a long-term storage apparatus, such as a hard disk, or may be a short-term storage apparatus configured to hold data received by the signalling module 15 or transferred from the listening module until it is read out by the calculation module 13. The storage module is configured to store uplink scheduling information including information indicating uplink transmission resources granted to user equipments served by the coverage cell. It may be that the uplink scheduling information is pre-loaded onto the storage module. Alternatively, the uplink scheduling information may be signalled to the signalling module 15 by the coverage base station itself, by another access node in the network, or by a higher level in the network architecture, such as the evolved packet core in LTE systems, and the uplink scheduling information is then transferred to the storage module 12 by the signalling module 15.

The uplink scheduling information could include:

- Identification of uplink transmission resources granted to UEs for transmission in previous subframes (allowing previously stored survey data to be processed appropriately by the calculation module);

- Identification of uplink transmission resources granted to UEs for transmission in future subframes;
- Identification of Subframes which can be assumed to contain no uplink transmissions from UEs served by the coverage cell. This could be indicated by a bit map of subframes or in some other form;
- Identification of subframes which can be assumed to always contain uplink transmissions from UEs served by the coverage cell;
- Identification of frequency domain resources (i.e. resource blocks (RBs)) which can be assumed to contain no uplink transmissions from UEs served by the coverage cell. This could be indicated by a bit map of RBs in the frequency domain;
- Identification of frequency domain resources (i.e. RBs) which can be assumed to always contain uplink transmissions from UEs served by the coverage cell;
- In addition, the uplink scheduling information may include, or be transferred or stored along with, time synchronisation information enabling the time offset between the coverage base station and the booster base station to be established, so that the booster base station can have accurate information regarding scheduled transmissions in the coverage cell.

The calculation module 13 is operable to receive data representing the survey performed by the listening module 11 from the listening module 11 itself, or to obtain the data from the storage module 12. The calculation module 13 is also operable to receive or obtain from the storage module 12 the uplink scheduling information indicating uplink transmission resources granted to user equipments served by the coverage cell. The calculation module 13 is operable to use the uplink scheduling information to exclude from the survey of uplink interference the uplink transmissions of UEs served by cells other than the coverage cell, thus obtaining an adjusted uplink interference. The adjusted uplink interference is a more accurate measure of the traffic load that the booster cell could take over from the coverage cell than a total of all uplink interference.

As an implementation option, the calculation module 13 may be configured to calculate an estimate of the thermal noise level $N_0$ for use by the switching module 14. The thermal noise level may be calculated using equation 1, a sum over all transmission resources (wherein 'all' may be an entire predefined range of potential uplink transmission resources). Alternatively, uplink scheduling information may be available for the calculation module to identify which transmission resources C are used by the coverage cell, and to exclude them from the calculation. In such an implementation, the thermal noise level $N_0$ is given by (equation 2):

$$N_0 \approx \sum_{i \notin C} E(f_i, t_i)$$

In practice it is desirable to only include in the measurement of background noise resources where it is known, or can be reasonably assumed, that there is no significant transmitted power. The thermal noise level may therefore exclude resources in which UEs served by the coverage cell are transmitting. This leads to equation 2.

The switching module 14 is configured to switch the booster cell from functioning in the second mode to functioning in the first mode in dependence upon whether the adjusted uplink interference meets a switching criterion. The switching module 14 may receive data from the calculation module 13 in a form ready for comparison with a threshold value or some other criterion, or it may be that the switching module 14 receives raw figures from the calculation module, such as the adjusted uplink interference and the thermal noise level, on which to perform further processing prior to comparison with a switching criterion. In a particular implementation, a value representing the increase in interference over thermal caused by UEs served by the coverage cell is calculated at either the calculation module 13 or at the switching module 14 using data from the calculation module 13. The increase in interference over thermal due to UEs served by the coverage cell can be expressed as follows (equation 3):

$$IoT_C = \sum_{i,j \in C} \frac{E(f_i, t_j) + N_0}{N_0}$$

Where $E(f_i, t_j)$ is the received uplink transmission power measured in transmission resources corresponding to frequency $f_i$ and time $t_j$. The set of resources C is limited to those corresponding to transmissions from UEs served by the coverage cell, so that when $i$ and $j$ are members of C, $E(f_i, t_j)$ is the adjusted uplink interference calculated by the calculation module.

The switching module 14 is operable to compare the increase in interference over thermal due to UEs served by the coverage cell (*IOT*$_c$) with a threshold value, and to switch the mode in which the booster base station operates the booster cell if the threshold is exceeded. Alternatively, the switching criterion may be more complex than a simple threshold, and it may be that a number of values of IOT$_c$ are obtained, for example over a number of time samples, and if a proportion of those values exceed a threshold value then the switching criterion is satisfied and the mode is switched. Depending on the implementation, other statistical methods can be used to decide whether or not the IOT$_c$ satisfies a switching criterion.

Additionally, the increase in interference over thermal could be defined for neighbour cells (eg cell A or cell B in Figure 3) by the calculation module 13, where the set of resources N are the transmission resources that the uplink scheduling information indicates are used by the neighbour cell. The rise in interference over thermal for a neighbour cell is given by (equation 4):

$$IoT_N = \sum_{i,j \in N} \frac{E(f_i, t_j) + N_0}{N_0}$$

The rise in interference over thermal for neighbour cells could be used as an indication of whether the booster cell could be activated (switched modes) in order to be used to handle traffic currently being served by a neighbour cell. As an example, a neighbour cell could be one controlled by the same eNodeB as the coverage cell.

In embodiments in which sufficient uplink scheduling is available, it may be that the thermal noise level $N_0$ is found by excluding uplink transmission resources currently being used by other cells. For example, resources being used in other cells controlled by the same eNodeB that controls the coverage cell could easily be excluded. Furthermore, if neighbouring cells (i.e. their controlling eNodeBs) provided uplink scheduling information on the resources being used in those cells, these resources could also be excluded from the noise estimate. In such embodiments, equation 5 is used for finding $N_0$:

$$N_0 \approx \sum_{i,j \notin C,N} E(f_i, t_j)$$

A measure of IoT such as that given by equation 3 reflects the rise in interference over "thermal", where "thermal" includes interference not under the control or outside the knowledge of the eNodeB controlling the coverage cell. This gives an accurate assessment of the relative significance of the interference from UEs served by the coverage cell.

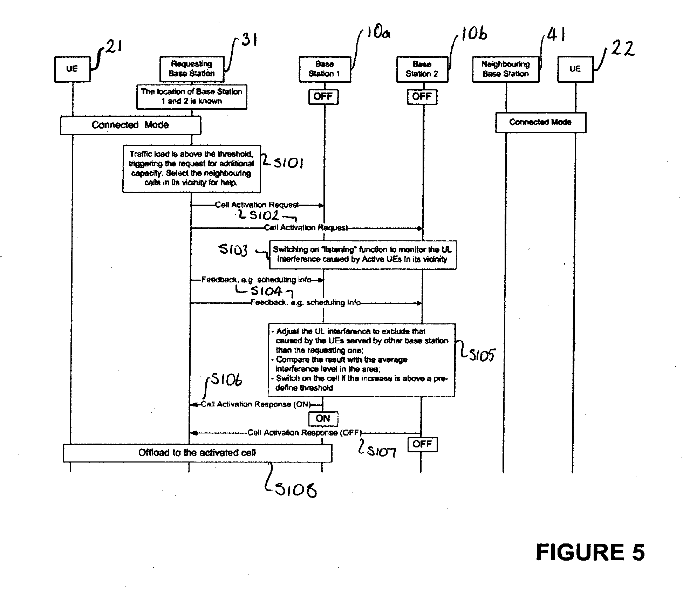

Figure 5 is a flowchart including the signalling used in a communication system embodying the present invention and operating in accordance with the LTE protocol. The system comprises a user equipment 21, a requesting base station 31 which is an example of a coverage base station, and base stations 1 10a and 2 10b which are examples of booster base stations. Neighbouring base station 41 and user equipment 22 may or may not be part of the system, but are included as an illustration of a user equipment 22 not being served by the coverage cell of the coverage base station 31 and transmitting uplink transmissions which are received as interference at the booster base stations 10a and 10b.

The coverage base station 31 is aware of the locations of booster base stations 10a and 10b. Both booster stations 10a and 10b are initially switched off, exemplary of a second mode. The UE 21 is connected to the coverage base station 31. The user equipment 22 is connected to the neighbouring base station 41.

At step S101, the traffic load at the coverage base station exceeds a threshold which, in this particular implementation, triggers a request for additional capacity. The coverage base station 31 selects booster base stations in its vicinity to which to send a cell activation request. It may be that the coverage base station 31 is aware of the precise locations of the booster base stations 10a and 10b and is also aware of the area within the coverage cell from which a heavy traffic load is originating, and hence can select the booster base stations 10a and 10b from a number of local booster base stations. Alternatively, the coverage base station may merely be aware that there are two booster base stations 10a and 10b whose cells at least partially overlap the coverage cell, and hence a cell activation request is sent to them. As a further alternative, the coverage base station may be aware (via signalling) of the current mode in which local booster base stations are operating, and booster base stations 10a and 10b are selected as cell activation request destinations based on the fact that they are operating in a mode which could be switched to provide extra capacity to the coverage cell.

At step S102 the coverage base station transmits a cell activation request message to booster base station 10a, and to booster base station 10b. The cell activation request message is received by the signalling module 15 of the booster base stations.

At step S103, in response to receiving the cell activation request, the listening modules 11 of booster base stations 10a and 10b switch on their listening function and perform a survey of the uplink interference caused by active UEs in their vicinity.

At step S104, the coverage base station signals uplink scheduling information to the booster base stations 10a and 10b for use in calculating the adjusted uplink interference and possibly other calculations.

At step S105, using the survey of uplink interference and the uplink scheduling information received from the coverage base station 31, the calculation modules 13 of booster base stations 10a and 10b are operable to adjust the survey of uplink interference to exclude interference caused by UEs served by other base stations than the origin of the cell activation request (the coverage cell). The result, the adjusted uplink interference, is used in a comparison with the average interference level in the area, for example by finding a value of $IOT_c$ using equation 3. Step S105 also includes the function of the switching module 14, which in this implementation uses a predefined threshold value of $IOT_c$ as the switching criterion, and switches its booster cell to function in the second mode if the threshold is exceeded.

In the example illustrated by Figure 5, the value of $IOT_c$ measured by booster base station 10a does exceed the threshold, and the booster cell of booster base station 10a is switched by its switching module 14 to function in its first mode, which in this example is simply being switched on. At step S106, the signalling module 15 of booster base station 10a is configured to send a response to the coverage base station 31 indicating that its booster cell has been switched on in response to the cell activation request. Contrarily, the value of the value of $IOT_c$ measured by booster base station 10b does not exceed the threshold, and booster base station 10b is not switched by its switching module 14, hence its booster cell remains in its second mode, which in this example is simply being switched off. At step S107, the signalling module 15 of booster base station 10b is configured to send a response to the coverage base station 31 indicating that it remains off in response to the cell activation request.

At step S108, one or more UEs connected to the coverage base station 31 that could be served by the booster cell of booster base station 10a are offloaded (via a handover) to the activated booster cell of booster base station 10a.

In computer program embodiments, the access node at which the computer program is executed is not limited by the particular communications protocol in accordance with which it usually functions. Exemplary access nodes include femto base stations and eNBs in the LTE protocol.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1.  A base station (10) arranged to operate in a wireless communications system as a booster base station providing a cell which is operable as a booster cell providing additional capacity to a coverage cell which it at least partially overlaps, the coverage cell being provided by a coverage base station, the booster cell being operable to function in a first mode and a second mode, wherein the booster cell provides more additional capacity to the coverage cell when functioning in the first mode than it does when functioning in the second mode, the booster base station comprising:

    a listening module (11) configured to perform a survey of uplink interference received at the booster base station;
    a scheduling information receiving module configured to receive, from the coverage base station, uplink scheduling information including information indicating uplink transmission resources granted to user equipments served by the coverage cell;
    a storage module (12) configured to store the uplink scheduling information;
    a calculation module (13) configured to calculate an adjusted uplink interference by subtracting from the survey of uplink interference a contribution made to the survey of uplink interference by user equipments which, based on the uplink scheduling information, are not served by the coverage cell; and
    a switching module (14) configured to switch the booster cell from functioning in the second mode to functioning in the first mode in dependence upon whether the adjusted uplink interference meets a switching criterion.

2.  The booster base station (10) according to claim 1, further comprising:

a request receiving module configured to receive a request for additional capacity from a coverage base station providing the coverage cell; wherein

the listening module (11) is configured to perform a survey of the uplink interference received at the booster base station in response to the request.

3. The booster base station (10) according to claim 1, wherein
the scheduling information receiving module is also configured to receive uplink scheduling information from base stations serving neighbouring cells for storage in the storage module as part of the scheduling information, the scheduling information from the neighbouring base stations indicating uplink transmission resources granted to user equipments served by those neighbouring base stations respectively.

4. The booster base station (10) according to any of claims 1 to 3, wherein
the scheduling information includes information indicating uplink transmission resources granted to user equipments for past and/or future subframes.

5. The booster base station (10) according to any of claims 1 to 4, wherein
the uplink transmission resources indicated by the scheduling information include subframes which can always be assumed to be granted to user equipments served by the coverage cell and/or to user equipments not served by the coverage cell.

6. The booster base station (10) according to any of claims 1 to 5, wherein
the uplink transmission resources indicated by the scheduling information include frequency domain resources which can always be assumed to be granted to user equipments served by the coverage cell and/or to user equipments not served by the coverage cell.

7. The booster base station (10) according to claim 6, wherein
the frequency domain resources are specified per sub-carrier.

8. The booster base station (10) according to any of claims 1 to 7, wherein
the uplink transmission resources indicated by the scheduling information include transmission resources defined in the spatial domain.

9. The booster base station (10) according to any of claims 1 to 8, wherein
the switching criterion is based on a ratio of the adjusted uplink interference to thermal noise.

10. The booster base station (10) according to any of claims 1 to 9, wherein
the second mode is a dormant mode in which the booster base station (10) does not provide any additional capacity to the coverage base station.

11. A method for deciding whether to switch a cell of a base station from functioning in a first mode to functioning in a second mode, the method for use in a base station (10) arranged to operate in a wireless communications system as a booster base station providing a cell which is operable as a booster cell providing additional capacity to a coverage cell which it at least partially overlaps, the coverage cell being provided by a coverage base station, the booster cell being operable to function in a first mode and a second mode, wherein the booster cell provides more additional capacity to the coverage cell when functioning in the first mode than it does when functioning in the second mode, the method comprising:

receiving, from the coverage base station, uplink scheduling information including information indicating uplink transmission resources granted to user equipments served by the coverage cell;
performing a survey of uplink interference received at the booster base station;
calculating an adjusted uplink interference by subtracting from the survey of uplink interference a contribution made to the survey of uplink interference by user equipments which are not served by the coverage cell, based on the received uplink scheduling information; and
switching the booster cell from functioning in the second mode to functioning in the first mode in dependence upon whether or not the adjusted uplink interference meets a switching criterion.

12. A base station arranged to operate in a wireless communications network as a coverage base station providing a cell which is operable as a coverage cell, the coverage cell at least partially overlapping a cell which is operable as a booster cell by a booster base station (10), providing additional capacity to the coverage cell, the booster cell being operable to function in a first mode and a second mode, wherein the booster cell provides more additional capacity to the coverage cell when functioning in the first mode than it does when functioning in the second mode, the coverage base station comprising:

an additional capacity requesting module configured to transmit a request for additional capacity to the booster base station (10) when traffic load at the coverage base station exceeds a threshold value;
a scheduling information transmitting module configured to transmit to the booster base station (10) uplink scheduling information including information identifying uplink transmission resources granted to user equipments served by the coverage cell.

13. A wireless communications system comprising a base station (10) according to any of claims 1 to 10.

14. A computer program which, when executed by a processor at an access node, causes the access node to function as a base station according to any of claims 1 to 10, or to execute a method according to claim 11.

**Patentansprüche**

1. Basisstation (10), die eingerichtet ist, um in einem drahtlosen Kommunikationssystem als eine Verstärkerbasisstation betrieben zu werden, die eine Zelle bereitstellt, die als eine Verstärkerzelle betriebsfähig ist, die zusätzliche Kapazität für eine Abdeckungszelle bereitstellt, mit der sie sich zumindest teilweise überlappt, wobei die Abdeckungszelle durch eine Abdeckungsbasisstation bereitgestellt wird, wobei die Verstärkerzelle betriebsfähig ist, um in einem ersten Betriebsmodus und einem zweiten Betriebsmodus zu funktionieren, wobei die Verstärkerzelle mehr zusätzliche Kapazität für die Abdeckungszelle bereitstellt, wenn sie in dem ersten Betriebsmodus funktioniert als wenn sie in dem zweiten Betriebsmodus funktioniert, wobei die Verstärkerbasisstation ferner Folgendes umfasst:

ein Hörmodul (11), das ausgestaltet ist, um eine Erhebung von an der Verstärkerbasisstation empfangener Uplink-Interferenz durchzuführen;
ein Planungsinformationsempfangsmodul, das ausgestaltet ist, um von der Abdeckungsbasisstation Uplink-Planungsinformationen zu empfangen, die Informationen umfassen, die Uplink-Senderessourcen angeben, die User-Equipments erteilt wurden, die durch die Abdeckungszelle bedient werden;
ein Speichermodul (12), das ausgestaltet ist, um die Uplink-Planungsinformationen zu speichern;
ein Berechnungsmodul (13), das konfiguriert ist, um eine eingestellte Uplink-Interferenz durch Subtrahieren eines zur Erhebung der Uplink-Interferenz erfolgten Beitrags von User Equipments, die auf der Grundlage der Uplink-Planungsinformationen nicht durch die Abdeckungszelle bedient werden, von der Erhebung der Uplink-Interferenz zu berechnen; und
ein Schaltmodul (14), das ausgestaltet ist, um die Verstärkerzelle vom Funktionieren in dem zweiten Betriebsmodus zum Funktionieren in dem ersten Betriebsmodus in Abhängigkeit davon umzuschalten, ob die eingestellte Uplink-Interferenz ein Schaltkriterium erfüllt.

2. Verstärkerbasisstation (10) nach Anspruch 1, die ferner Folgendes umfasst:

ein Anforderungsempfangsmodul, das ausgestaltet ist, um eine Anforderung für zusätzliche Kapazität von einer Abdeckungsbasisstation zu empfangen, die die Abdeckungszelle bereitstellt; wobei
das Hörmodul (11) konfiguriert ist, um eine Erhebung der an der Verstärkerbasisstation empfangenen Uplink-Interferenz als Reaktion auf die Anforderung durchzuführen.

3. Verstärkerbasisstation (10) nach Anspruch 1, wobei:

das Planungsinformationsempfangsmodul auch ausgestaltet ist, um Uplink-Planungsinformationen von Basisstationen, die benachbarte Zellen bedienen, zum Speichern in dem Speichermodul als Teil der Planungsinformationen zu empfangen, wobei die Planungsinformationen von den benachbarten Basisstationen Uplink-Senderessourcen angeben, die User Equipments erteilt wurden, die jeweils durch diese benachbarten Basisstationen bedient werden.

4. Verstärkerbasisstation (10) nach einem der Ansprüche 1 bis 3, wobei die Planungsinformationen Informationen umfassen, die Uplink-Senderessourcen angeben, die User Equipments für vergangene und/oder zukünftige Unterrahmen erteilt wurden.

5. Verstärkerbasisstation (10) nach einem der Ansprüche 1 bis 4, wobei die Uplink-Senderessourcen, die durch die Planungsinformationen angegeben werden, Unterrahmen umfassen, von denen immer angenommen werden kann, dass sie User Equipments, die durch die Abdeckungszelle bedient werden, und/oder User Equipments erteilt wurden, die nicht durch die Abdeckungszelle bedient werden.

6. Verstärkerbasisstation (10) nach einem der Ansprüche 1 bis 5, wobei die durch die Planungsinformationen angegebenen Uplink-Senderessourcen Frequenzbereichsressourcen umfassen, von denen immer angenommen werden kann, dass sie User Equipments, die durch die Abdeckungszellen bedient werden, und/oder User Equipments erteilt wurden, die nicht durch die Abdeckungszelle bedient werden.

7. Verstärkerbasisstation (10) nach Anspruch 6, wobei die Frequenzbereichsressourcen pro Zwischenträger angegeben werden.

8. Verstärkerbasisstation (10) nach einem der Ansprüche 1 bis 7, wobei die Uplink-Senderessourcen, die durch die Planungsinformationen angegeben werden, Senderessourcen umfassen, die im Raumbereich definiert sind.

9. Verstärkerbasisstation (10) nach einem der Ansprüche 1 bis 8, wobei das Schaltkriterium auf einem Verhältnis der eingestellten Uplink-Interferenz zum thermischen Rauschen gründet.

10. Verstärkerbasisstation (10) nach einem der Ansprüche 1 bis 9, wobei der zweite Betriebsmodus ein Ruhebetriebsmodus ist, in dem die Verstärkerbasisstation (10) keine zusätzliche Kapazität für die Abdeckungsbasisstation bereitstellt.

11. Verfahren zum Entscheiden, ob eine Zelle einer Basisstation vom Funktionieren in einem ersten Betriebsmodus zum Funktionieren in einem zweiten Betriebsmodus umzuschalten ist, wobei das Verfahren zur Verwendung in einer Basisstation (10) ausgestaltet ist, die eingerichtet ist, um in einem drahtlosen Kommunikationssystem als eine Verstärkerbasisstation betrieben zu werden, die eine Zelle bereitstellt, die als eine Verstärkerzelle betriebsfähig ist, die zusätzliche Kapazität für eine Abdeckungszelle bereitstellt, mit der sie sich zumindest teilweise überlappt, wobei die Abdeckungszelle durch eine Abdeckungsbasisstation bereitgestellt wird, wobei die Verstärkerzelle betriebsfähig ist, um in einem ersten Betriebsmodus und einem zweiten Betriebsmodus zu funktionieren, wobei die Verstärkerzelle mehr zusätzliche Kapazität für die Abdeckungszelle bereitstellt, wenn sie in dem ersten Betriebsmodus funktioniert als wenn sie in dem zweiten Betriebsmodus funktioniert, wobei das Verfahren ferner Folgendes umfasst:

    Empfangen von Uplink-Planungsinformationen, die Informationen umfassen, die Uplink-Senderessourcen angeben, die User Equipments erteilt wurden, die durch die Abdeckungszelle bedient werden, von der Abdeckungsbasisstation;
    Durchführen einer Erhebung von Uplink-Interferenz, die an der Verstärkerbasisstation empfangen wird;
    Berechnen einer eingestellten Uplink-Interferenz durch Subtrahieren eines erfolgten Beitrags zur Erhebung der Uplink-Interferenz von User Equipments, die auf der Grundlage der empfangenen Uplink-Planungsinformationen nicht durch die Abdeckungszelle bedient werden, von der Erhebung der Uplink-Interferenz; und
    Umschalten der Verstärkerzelle vom Funktionieren in dem zweiten Betriebsmodus zum Funktionieren in dem ersten Betriebsmodus in Abhängigkeit davon, ob die eingestellte Uplink-Interferenz ein Schaltkriterium erfüllt.

12. Basisstation, die eingerichtet ist, um in einem drahtlosen Kommunikationsnetz als eine Abdeckungsbasisstation betrieben zu werden, die eine Zelle bereitstellt, die als eine Abdeckungszelle betriebsfähig ist, wobei die Abdeckungszelle sich zumindest teilweise mit einer Zelle überlappt, die als eine Verstärkerzelle durch eine Verstärkerbasisstation (10) betrieben werden kann, die zusätzliche Kapazität für die Abdeckungszelle bereitstellt, wobei die Verstärkerzelle betriebsfähig ist, um in einem ersten Betriebsmodus und in einem zweiten Betriebsmodus zu funktionieren, wobei die Verstärkerzelle mehr zusätzliche Kapazität für die Abdeckungszelle bereitstellt, wenn sie in dem ersten Betriebsmodus funktioniert als wenn sie im zweiten Betriebsmodus funktioniert, wobei die Abdeckungsbasisstation Folgendes umfasst:

    ein Modul zum Anfordern zusätzlicher Kapazität, das ausgestaltet ist, um eine Anforderung nach zusätzlicher Kapazität an die Verstärkerbasisstation (10) zu senden, wenn die Verkehrslast an der Abdeckungsbasisstation einen Schwellenwert überschreitet;
    ein Planungsinformationssendemodul, das ausgestaltet ist, um Uplink-Planungsinformationen, die Informationen umfassen, die Uplink-Senderessourcen identifizieren, die User Equipments erteilt wurden, die durch die Abdeckungszelle bedient werden, an die Verstärkerbasisstation (10) zu senden.

**13.** Drahtloses Kommunikationssystem, das eine Basisstation (10) nach einem der Ansprüche 1 bis 10 umfasst.

**14.** Computerprogramm, das, wenn es durch einen Prozessor an einem Zugangsknoten ausgeführt wird, bewirkt, dass der Zugangsknoten als eine Basisstation nach einem der Ansprüche 1 bis 10 funktioniert oder ein Verfahren nach Anspruch 11 ausführt.

**Revendications**

**1.** Station de base (10) agencée pour fonctionner dans un système de communications sans fil en tant que station de base amplificatrice fournissant une cellule qui peut fonctionner en tant que cellule amplificatrice délivrant une capacité supplémentaire à une cellule de couverture qu'elle recouvre au moins partiellement, la cellule de couverture étant fournie par une station de base de couverture, la cellule amplificatrice pouvant fonctionner dans un premier mode et un second mode, dans lequel la cellule amplificatrice délivre plus de capacité supplémentaire à la cellule de couverture lorsqu'elle fonctionne dans le premier mode qu'elle ne le fait lorsqu'elle fonctionne dans le second mode, la station de base amplificatrice comportant :

un module d'écoute (11) configuré pour effectuer une surveillance d'une interférence en liaison montante reçue dans la station de base amplificatrice ;
un module recevant une information de planification conçue pour recevoir, depuis la station de base de couverture, une information de planification en liaison montante comprenant une information indiquant des ressources de transmission en liaison montante attribuées aux équipements utilisateurs desservis par la cellule de couverture ;
un module de stockage (12) configuré pour mémoriser l'information de planification en liaison montante;
un module de calcul (13) configuré pour calculer une interférence en liaison montante réglée en soustrayant de la surveillance de l'interférence en liaison montante une contribution réalisée pour la surveillance de l'interférence en liaison montante par les équipements utilisateurs qui, en fonction de l'information de planification en liaison montante, ne sont pas desservis par la cellule de couverture; et
un module de commutation (14) configuré pour commuter la cellule amplificatrice d'un fonctionnement dans le second mode dans un fonctionnement dans le premier mode selon que l'interférence en liaison montante réglée répond à un critère de commutation.

**2.** Station de base amplificatrice (10) selon la revendication 1, comportant en outre :

un module recevant une requête configuré pour recevoir une requête pour une capacité supplémentaire provenant d'une station de base de couverture fournissant la cellule de couverture ; dans lequel
le module d'écoute (11) est configuré pour effectuer une surveillance de l'interférence en liaison montante reçue dans la station de base amplificatrice en réponse à la requête.

**3.** Station de base amplificatrice (10) selon la revendication 1, dans laquelle
le module recevant l'information de planification est également configuré pour recevoir une information de planification en liaison montante des stations de base desservant les cellules adjacentes pour un stockage dans le module de stockage en tant que partie de 1'information de planification, l'information de planification provenant des stations de base adjacentes indiquant des ressources de transmission en liaison montante attribuées à des équipements utilisateurs desservis par ces stations de base adjacentes respectivement.

**4.** Station de base amplificatrice (10) selon l'une quelconque des revendications 1 à 3, dans laquelle
l'information de planification comprend une information indiquant des ressources de transmission en liaison montante attribuées aux équipements utilisateurs pour des sous-trames passées et/ou futures.

**5.** Station de base amplificatrice (10) selon l'une quelconque des revendications 1 à 4, dans laquelle
les ressources de transmission en liaison montante indiquées par l'information de planification comprennent des sous-trames qui peuvent toujours être supposées être attribuées aux équipements utilisateurs desservis par la cellule de couverture et/ou aux équipements utilisateurs non desservis par la cellule de couverture.

**6.** Station de base amplificatrice (10) selon l'une quelconque des revendications 1 à 5, dans laquelle les ressources de transmission en liaison montante indiquées par l'information de planification comprennent des ressources de domaine fréquentiel qui peuvent toujours être supposées être attribuées aux équipements utilisateurs desservis par la cellule de couverture et/ou aux équipements utilisateurs non desservis par la cellule de couverture.

**7.** Station de base amplificatrice (10) selon la revendication 6, dans laquelle les ressources de domaine fréquentiel sont spécifiées par sous-porteuse.

**8.** Station de base amplificatrice (10) selon l'une quelconque des revendications 1 à 7, dans laquelle les ressources de transmission en liaison montante indiquées par l'information de planification comprennent des ressources de transmission définies dans le domaine spatial.

**9.** Station de base amplificatrice (10) selon l'une quelconque des revendications 1 à 8, dans laquelle le critère de commutation est basé sur un rapport de l'interférence en liaison montante réglée par rapport au bruit thermique.

**10.** Station de base amplificatrice (10) selon l'une quelconque des revendications 1 à 9, dans laquelle le second mode est un mode dormant dans lequel la station de base amplificatrice (10) ne peut pas délivrer de capacité supplémentaire quelconque à la station de base de couverture.

**11.** Procédé pour décider s'il faut commuter une cellule d'une station de base d'un fonctionnement dans un premier mode dans un fonctionnement dans un second mode, le procédé étant utilisé dans une station de base (10) agencée pour fonctionner dans un système de communications sans fil fournissant une cellule qui peut fonctionner en tant que cellule amplificatrice délivrant une capacité supplémentaire à une cellule de couverture qu'elle recouvre au moins partiellement, la cellule de couverture étant fournie par une station de base de couverture, la cellule amplificatrice pouvant fonctionner dans un premier mode et un second mode, dans lequel la cellule amplificatrice délivre plus de capacité supplémentaire à la cellule de couverture lorsqu'elle fonctionne dans le premier mode qu'elle ne le fait lorsqu'elle fonctionne dans le second mode, le procédé comportant :

la réception, depuis la station de base de couverture, d'une information de planification en liaison montante comprenant une information indiquant des ressources de transmission en liaison montante attribuées à des équipements utilisateurs desservis par la cellule de couverture ;
l'exécution d'une surveillance d'une interférence en liaison montante reçue dans la station de base amplificatrice ;
le calcul d'une interférence en liaison montante réglée en retranchant de la surveillance de l'interférence en liaison montante une contribution réalisée pour la surveillance de l'interférence en liaison montante par des équipements utilisateurs qui ne sont pas desservis par la cellule de couverture, en fonction de l'information de planification en liaison montante reçue ; et
la commutation de la cellule amplificatrice d'un fonctionnement dans le second mode en un fonctionnement dans le premier mode selon que l'interférence en liaison montante réglée répond ou non à un critère de commutation.

**12.** Station de base agencée pour fonctionner dans un réseau de communications sans fil en tant que station de base de couverture fournissant une cellule qui peut fonctionner en tant que cellule de couverture, la cellule de couverture recouvrant au moins partiellement une cellule qui peut fonctionner en tant que cellule amplificatrice grâce à une station de base amplificatrice (10), délivrant une capacité supplémentaire à la cellule de couverture, la cellule amplificatrice pouvant fonctionner dans un premier mode et un second mode, dans lequel la cellule amplificatrice délivre plus de capacité supplémentaire à la cellule de couverture lorsqu'elle fonctionne dans le premier mode qu'elle ne le fait lorsqu'elle fonctionne dans le second mode, la station de base de couverture comportant :

un module de requête de capacité supplémentaire configuré pour transmettre une requête pour une capacité supplémentaire à la station de base amplificatrice (10) lorsqu'une charge de trafic à la station de base de couverture dépasse une valeur de seuil ;
un module de transmission d'information de planification configuré pour transmettre à la station de base amplificatrice (10) une information de planification en liaison montante comprenant une information identifiant des ressources de transmission en liaison montante attribuées à des équipements utilisateurs desservis par la cellule de couverture.

13. Système de communication sans fil comportant une station de base (10) selon l'une quelconque des revendications 1 à 10.

14. Programme informatique qui, lorsqu'il est exécuté par un processeur à un noeud d'accès, amène le noeud d'accès à fonctionner en tant que station de base selon l'une quelconque des revendications 1 à 10, ou à exécuter un procédé selon la revendication 11.

**FIGURE 1**

FIGURE 2

**FIGURE 3**

10

listening module
11

storage module
12

calculation
module
13

switching
module
14

signalling
module
15

**FIGURE 4**

**FIGURE 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010093298 A1

**Non-patent literature cited in the description**

- *3GPP TR 36.401*
- 3rd Generation Partnership Project; Technical Specification Group Radio Access networks; Evolved Universal Terrestrial Radio Access (E-UTRA); Potential solutions for energy saving for E-UTRAN (Release 10). *3GPP,* 06 March 2011

- **ERICSSON.** Considerations on energy saving solutions in heterogeneous networks. *3GPP DRAFT; R3-092478,* 12 October 2009